# EUROPÄISCHE PATENTSCHRIFT

(11) **EP 3 111 112 B1**
(45) Veröffentlichungstag und Bekanntmachung des Hinweises auf die Patenterteilung: **29.05.2019**
(21) Anmeldenummer: 15707874.2
(22) Anmeldetag: 25.02.2015
(51) Int. Cl.: F16H 63/48, B60T 7/12

(54) **VERFAHREN UND STEUERVORRICHTUNG ZUR BETÄTIGUNG EINER BREMSEINRICHTUNG EINES EIN AUTOMATIKGETRIEBE AUFWEISENDEN ANTRIEBSSTRANGS EINES FAHRZEUGS**
METHOD AND CONTROLLER FOR ACTUATING A BRAKING DEVICE OF A VEHICLE POWERTRAIN HAVING AN AUTOMATIC TRANSMISSION
PROCÉDÉ ET DISPOSITIF DE COMMANDE PERMETTANT D'ACTIONNER UN DISPOSITIF DE FREINAGE D'UNE CHAÎNE CINÉMATIQUE, COMPRENANT UNE TRANSMISSION AUTOMATIQUE, D'UN VÉHICULE

(30) Priorität: 26.02.2014 DE 102014002817
(43) Veröffentlichungstag der Anmeldung: 04.01.2017
(73) Patentinhaber: Audi AG, 85049 Ingolstadt (DE)
(72) Erfinder: FÖRSTER, Kilian, 92339 Beilngries (DE); WOHNERT, Dietmar, 85051 Ingolstadt (DE)
(74) Vertreter: Lehle, Josef
(86) Internationale Anmeldenummer: PCT/EP2015/000426
(87) Internationale Veröffentlichungsnummer: WO 2015/128082

(56) Entgegenhaltungen:
- EP-A1- 1 327 566
- EP-A1- 2 559 600
- US-A1- 2008 051 252
- US-B1- 6 679 810

## Beschreibung

Die Erfindung betrifft ein Verfahren zur Betätigung einer Bremseinrichtung eines ein Automatikgetriebe aufweisenden Antriebsstrangs eines Fahrzeugs, insbesondere eines Kraftfahrzeugs, nach dem Oberbegriff des Anspruchs 1. Ferner betrifft die Erfindung eine Steuervorrichtung zur Betätigung einer Bremseinrichtung eines ein Automatikgetriebe aufweisenden Antriebsstrangs eines Fahrzeugs, insbesondere eines Kraftfahrzeugs, nach dem Oberbegriff des Anspruchs 19 sowie ein Fahrzeug nach Anspruch 21.

In modernen Kraftfahrzeugen mit einem Automatikgetriebe gibt es verschiedene Sicherungsmechanismen, um das Fahrzeug sicher festgebremst abzustellen. Diese Bestandteile einer Bremseinrichtung bildenden Sicherungsmechanismen sind im Wesentlichen die Feststellbremse und die Betriebsbremse sowie des weiteren die Parksperre im Automatikgetriebe selbst. Die Betriebsbremse ermöglicht hauptsächlich die Verringerung der Fahrzeuggeschwindigkeit bis zum Stillstand des Fahrzeugs und wird regelmäßig mit dem Fuß über ein Bremspedal betätigt, kann aber auch über eine Bremskraftverstärkungseinrichtung (aktiver BKV) oder ein Schlupfregelsystem (ESC) aufgebaut werden, zum Beispiel bei einem hochautomatisierten bzw. pilotiertem Fahren. Dabei wirkt die Betriebsbremse vorzugsweise auf alle Räder des Fahrzeugs. Die Betriebsbremse ist dabei oftmals als hydraulische Betriebsbremse ausgelegt, bei der die Bremskraft durch einen Flüssigkeitsdruck in Bremsleitungen hydraulisch übertragen wird, kann jedoch auch alternativ eine pneumatische Betriebsbremse sein, bei der die Bremskraft durch komprimierte Luft in den Bremsleitungen pneumatisch übertragen wird.

Die Feststellbremse (oft auch Parkbremse genannt) ist konventionell eine mechanische Feststellbremse, die vom Fahrer mit dem Fuß oder der Hand betätigt wird und die über Seilzüge eine Feststellkraft an den zugeordneten Rädern des Fahrzeugs erzeugt. Konkret wird hierbei mit einer Betätigungseinheit vom Bediener eine mechanische Kraft erzeugt, die über mechanische Seilzüge bis zur Bremsanlage übertragen wird, in der dann eine Kraft auf eine Bremsscheibe oder Bremstrommel ausgeübt wird. Moderne Feststellbremsen sind als elektrische bzw. elektronische Feststellbremsen ausgebildet, bei der die bremskraftübertragenden Aktoren mittels einer elektrischen Steuervorrichtung angesteuert werden. Die Feststellbremse soll ein haltendes oder abgestelltes Fahrzeug gegen Wegrollen, auch bei geneigter Fahrbahn, sichern. Das heißt mit anderen Worten, dass die Feststellbremse, ebenso wie die nachstehend noch näher beschriebene Parksperre, grundsätzlich für ein zeitlich unbegrenztes Abstellen (Parken) konzipiert ist bzw. sind, während die Betriebsbremse dagegen grundsätzlich für ein kurzfristiges Halten ausgelegt ist.

Die Parksperre im Automatikgetriebe funktioniert dergestalt, dass, wenn der Fahrer die Parkstufe "P" anwählt, zum Beispiel über einen Wählhebel, eine, vorzugsweise elektrisch angesteuerte bzw. elektromechanisch betriebene, Parkklinke im Getriebe einrückt. Diese Parkklinke rastet in das zugehörige Parksperrenrad ein, welches vorzugsweise drehfest auf einer Abtriebswelle des Getriebes bzw. des Antriebsstranges angeordnet ist. Die Parkklinke ist beispielsweise am Getriebegehäuse selbst angebunden. Wenn nun die Parkklinke in das Parksperrenrad einrastet, wird das Parksperrenrad so blockiert, dass es sich nicht mehr verdrehen lässt, wodurch auch die Abtriebswelle des Getriebes bzw. Antriebsstrangs blockiert wird und dementsprechend auch die Räder des Fahrzeugs blockiert sind. Wird ein Fahrzeug beispielsweise an einem Hang mit einer Steigung bzw. einem Gefälle (und damit ganz allgemein gesprochen auf einer schiefen Ebene) abgestellt, steht die Parksperre herkömmlich unter Last, da das Fahrzeug, nachdem die Parkstufe "P" eingelegt worden ist, noch ein wenig zurückrollt, bis die Parksperre greift. Konkret wird hierbei das Parksperrenrad mit einem Drehmoment, das sich aus der auf das Fahrzeug wirkenden Hangabtriebskraft ergibt, beaufschlagt. Dieses Drehmoment wird über die Sperrklinke am Getriebegehäuse abgestützt, was letztendlich dazu führt, dass sich die Klinkenverzahnung mit der Verzahnung des Parksperrenrades stark verspannt, wobei je nach Richtung des Drehmomentes eine rechtsseitige Parksperrenverspannung oder eine linksseitige Parksperrenverspannung auftritt. Dieser Verspannungszustand im Antriebsstrang bzw. im Getriebe führt dazu, dass sich beim Auslegen bzw. Deaktivieren der Parksperre, bei dem die Verzahnung der Parkklinke außer Eingriff mit der Verzahnung des Parksperrenrads gebracht wird, der Antriebsstrang schlagartig entspannt, was fahrzeugseitig als deutlicher Ruck zu spüren ist und zudem oftmals ein lautes Geräusch (Auslegeschlag) erzeugt, der von einem Nutzer als unangenehm und störend empfunden wird.

Ein zusätzlicher Nachteil ist, dass die benötigte Kraft, um die Parksperre auszulegen, mit der Größenordnung der Verspannung ansteigt. Dies kann gegebenenfalls soweit führen, dass die Parksperre nur mit großem Kraftaufwand ausgelegt werden kann. Die Höhe der Verspannung selbst ist dabei von dem Bremsmoment an den Rädern abhängig, welches wiederum abhängig von der Hangabtriebskraft ist. Die Hangabtriebskraft selbst ist wiederum abhängig von der Fahrbahnneigung und dem Fahrzeuggewicht.

Aus der DE 10 2013 212 829 A1 ist bereits ein System und ein Verfahren zum kombinierten Steuern einer elektronisch ansteuerbaren Feststellbremse und einer als mechanische Verriegelungseinrichtung ausgestalteten, elektronisch ansteuerbaren Parksperre eines Kraftfahrzeugs bekannt, mittels dem ein Auslegeschlag beim Lösen einer als mechanische Verriegelung ausgebildeten Parksperre eines Kraftfahrzeugs verhindert werden soll. Konkret umfasst dieses System eine elektronische Feststelleinrichtung zum elektronischen Ansteuern der Feststellbremse, eine elektronische Sperreinrichtung zum elektronischen Ansteuern der Parksperre, eine elektronische Berganfahrassistenzeinrichtung zum elektronischen Ansteuern der Feststellbremse, eine elektronische Einrichtung zum Erfassen des Vorliegens von wenigstens einer Parkbedingung und eine automatische Ablaufsteuerung, welche die Feststelleinrichtung, die Sperreinrichtung und die Berganfahrassistenzeinrichtung derart steuert, dass bei Erfassung der Parkbedingung die Parksperre mittels der Sperreinrichtung aktiviert wird, weiter die Feststelleinrichtung mit dem Aufbau eines zum Feststellen der Feststellbremse ausreichenden Feststelldrucks beginnt und die Feststellbremse mittels der Berganfahrassistenzeinrichtung festgestellt wird, bis mittels der Feststelleinrichtung der zum Feststellen der Feststellbremse ausreichende Feststelldruck aufgebaut worden ist. Dadurch, dass die Feststellbremse mittels der Berganfahrassistenzeinrichtung festgestellt wird, bis mittels der Feststelleinrichtung der zum Feststellen der Feststellbremse ausreichende Feststelldruck aufgebaut worden ist, soll verhindert werden, dass ein Fahrzeug nach Aktivierung der Parksperre sich aus dem Stillstand heraus bewegen kann, wenn der mittels der Feststelleinrichtung zum Feststellen der Feststellbremse aufgebaute Druck noch nicht ausreicht, um die Feststellbremse festzustellen. Hierdurch soll verhindert werden, dass die als mechanische Verriegelungseinrichtung ausgebildete Parksperre belastet wird. Dies soll wiederum dazu führen, dass es beim Lösen der Parksperre nicht zu dem unerwünschten Auslegeschlag kommt. Konkret wird hier somit das Fahrzeug einzig und allein durch die Feststellbremse gegen ein Wegrollen gesichert.

Trotz dieser Maßnahme kann der Fahrer jedoch in Situationen kommen, die einen unverminderten Auslegeschlag generieren. Dies ist zum Beispiel der Fall, wenn der Fahrer, ausgehend vom Fahrzeugstillstand bei eingelegter Parksperre, die Feststellbreme löst bevor er die Parksperre ausgelegt hat, weil dann das Fahrzeug wegrollen kann und somit in die Parksperre fällt, die sich wie oben beschrieben verspannt.

Die weitere US 6 679 810 B1 betrifft ein Verfahren zur Vermeidung einer unbeabsichtigten Rollbewegung eines motorisierten Fahrzeugs, bei dem zunächst erfasst wird, ob eine Antriebseinrichtung des Fahrzeugs drehmomentübertragend mit wenigstens einem Fahrzeugrad des Fahrzeugs verbunden ist. Zudem wird auch ermittelt, ob die aktuelle Geschwindigkeit des Fahrzeugs geringer ist als ein vorbestimmter Geschwindigkeits-Grenzwert. Sofern die Antriebseinrichtung des Fahrzeugs dann nicht drehmomentübertragend mit wenigstens einem der Fahrzeugräder verbunden ist und die Geschwindigkeit des Fahrzeugs geringer ist als der Geschwindigkeits-Grenzwert, wird ein Bremssystem des Fahrzeugs aktiviert, um eine Rollbewegung des Fahrzeugs zu verhindern.

Aufgabe der vorliegenden Erfindung ist es, ein Verfahren und eine Steuervorrichtung zur Betätigung einer Bremseinrichtung eines ein Automatikgetriebe aufweisenden Fahrzeugs, insbesondere eines Kraftfahrzeugs, zur Verfügung zu stellen, mittels dem bzw. mittels der eine Parksperrenbetätigung derart optimiert wird, dass ein Auslegeschlag beim Auslegen der Parksperre zuverlässig verhindert wird.

Diese Aufgabe wird gelöst mit den Merkmalen der unabhängigen Patentansprüche 1 und 19. Vorteilhafte Ausgestaltungen sind Gegenstand der darauf rückbezogenen Unteransprüche.

Gemäß Anspruch 1 wird ein Verfahren zur Betätigung einer Bremseinrichtung eines ein Automatikgetriebe aufweisenden Antriebsstranges eines Fahrzeugs, insbesondere eines Kraftfahrzeugs, vorgeschlagen, mit einer getriebeseitigen Parksperre und mit wenigstens einer Bremsanlage, wobei das Fahrzeug, ausgehend von einem abgestellten bzw. stillstehenden Fahrzeug und einer eingelegten Parksperre, insbesondere einer unbelastet bzw. unverspannt eingelegten, Parksperre, bei Vorliegen einer Anfahrbedingung, vorzugsweise unabhängig von einem Fahrerwunsch und/oder vorzugsweise gesteuert mit wenigstens einer Steuervorrichtung, so lange mittels wenigstens einer Bremsanlage gegen ein Wegrollen gesichert wird, bis die Parksperre ausgelegt ist.

Mit dieser erfindungsgemäßen Lösung kann somit sichergestellt werden, dass eine Parksperre entlastet und ohne bzw. ohne wesentlichen Auslegeschlag ausgelegt werden kann bzw. eine vorteilhafterweise vorhandene Entlastung der Parksperre auch beim Auflösen des Parkzustandes erhalten bleibt.

Dies kann grundsätzlich durch eine geschlossene bzw. aktivierte Feststellbremse und/oder einen entsprechenden betriebsbremsenseitigen Bremsdruck erreicht werden. Mit anderen Worten kann der Auslegeschlag beim Vorliegen einer Anfahrbedingung bzw. beim Auflösen des Parkzustandes dadurch gemindert bzw. unterbunden, dass die eingelegte Parksperre, bevorzugt eine unbelastet eingelegte Parksperre, stets vor dem Lösen bzw. Öffnen der Feststellbremse und/oder dem Abbau eines eine Wegrollsicherung darstellenden betriebsbremsenseitigen Bremsdrucks ausgelegt wird.

Mit der erfindungsgemäßen Lösung kann somit, unabhängig von einem Fahrerwunsch (das heißt ausdrücklich auch gegen einen Fahrerwunsch, mit dem zum Beispiel die Feststellbremse zu einem Zeitpunkt gelöst werden soll, zu dem die Parksperre noch eingelegt ist), die das Wegrollen sicherstellende Bremskraft solange gehalten werden, bis die Parksperre sicher ausgelegt ist.

Das heißt, dass die erfindungsgemäße Lösung sicherstellt, dass die Parksperre entlastet ausgelegt werden kann, da das Fahrzeug beim Auslegevorgang nach wie vor stillsteht. Das Vorliegen einer Anfahrbedingung bzw. das Auflösen des Parkzustandes kann dabei jede geeignete Betriebssituation bzw. Betätigung von fahrzeugseitigen Bedieneinrichtungen sein, die auf einen unmittelbar bevorstehenden oder bereits eingeleiteten Anfahrvorgang schließen lassen, zum Beispiel, aber nicht ausschließlich, das Schalten von einer Parkstufe in eine nicht der Parkstufe entsprechende Stufe, zum Beispiel eine Fahrstufe, des Automatikgetriebes und/oder das Lösen der Feststellbremse und/oder das Betätigen der Betriebsbremse.

Die Begrifflichkeit unbelastet bzw. unverspannt in Verbindung mit der Parksperre bedeutet dabei, dass eine Parkklinke der Parksperre so in ein zugeordnetes Parksperrenrad der Parksperre eingreift, dass es beim Auslegen der Parksperre zu keinem bzw. keinem nennenswerten Auslegeschlag kommt, das heißt mit anderen Worten zu keiner Verspannung zwischen der Parkklinke und dem Parksperrenrad, insbesondere einer Parkklinkenverzahnung mit der Verzahnung des Parksperrenrades, kommt bzw. allenfalls zu einer solchen definiert geringen Verspannung zwischen der Parkklinke und dem Parksperrenrad, insbesondere einer Parkklinkenverzahnung mit der Verzahnung des Parksperrenrades, kommt, mit der ein Auslegeschlag nach wie vor vermieden oder zumindest in einem erheblichen Maße vermieden oder verringert wird.

Erfindungsgemäß ist vorgesehen, dass das Fahrzeug sowohl eine Betriebsbremse, vorzugsweise eine hydraulische oder pneumatische Betriebsbremse, als auch eine unabhängig von der Betriebsbreme betätigbare Feststellbremse, vorzugsweise eine elektrische Feststellbremse, als voneinander unabhängig betätigbare Bremsanlagen aufweist, mittels denen das Fahrzeug gegen ein Wegrollen gesichert werden kann.

Weiter erfindungsgemäß ist vorgesehen, dass das Auslegen der Parksperre, ausgehend von einem abgestellten Fahrzeug mit eingelegter Parksperre, insbesondere unbelastet eingelegter Parksperre, und aktivierter Feststellbremse, bei einem Lösen der Festellbremse erst dann gesteuert mit der Steuervorrichtung freigegeben bzw. gegebenenfalls auch durchgeführt wird, wenn das Fahrzeug mittels der Betriebsbremse gegen ein Wegrollen gesichert ist, was zum Beispiel mittels der Steuervorrichtung ermittelt wird. Dies bedeutet mit anderen Worten, dass ein Fahrer, zuerst einmal unabhängig davon, ob er die Betriebsbremse betätigt oder nicht-betätigt, die Festellbremse löst, wodurch die Gefahr besteht, dass das Fahrzeug in die Parksperre fällt und es zu parksperrenseitigen Belastungen bzw. Verspannungen kommt, die beim Auslegen der Parksperre einen Auslegeschlag bedeuten würden. Deswegen überprüft in diesem Fall die Steuervorrichtung zunächst einmal, ob das Fahrzeug mittels der Betriebsbremse gegen ein Wegrollen gesichert ist; erst wenn dies der Fall ist, lässt die Steuervorrichtung das Auslegen der Parksperre zu.

Gemäß einer konkreten Verfahrensführung hierzu ist vorgesehen, dass mittels der Steuervorrichtung ermittelt wird, ob ein betriebsbremsenseitiger Bremsdruck, insbesondere unabhängig von einer weiteren Betätigung der Betriebsbremse durch den Fahrer, bei einer zum Zeitpunkt des Lösens der Feststellbremse betätigten Betriebsbremse so eingestellt ist, dass das Fahrzeug gegen ein Wegrollen gesichert ist. Hierfür kann zum Beispiel bei einer zum Zeitpunkt des Lösens der Festellbremse betätigten Betriebsbremse der aktuelle betriebsbremsenseitige Bremsdruck, insbesondere unabhängig von einer weiteren Betätigung der Betriebsbremse durch einen Fahrer, gesteuert mittels der Steuervorrichtung beibehalten und/oder aufrechterhalten werden. Reicht dann zum Beispiel der vorhandene betriebsbremsenseitige Bremsdruck aus, um das Fahrzeug bereits zu diesem Zeitpunkt gegen ein Wegrollen zu sichern, kann das Auslegen der Parksperre von der Steuervorrichtung sofort freigegeben bzw. gegebenenfalls durchgeführt werden. Diese konkrete Verfahrensführung berücksichtigt zum einen, dass der betriebsbremsenseitige Bremsdruck im Falle der betätigten Betriebsbremse in der Regel ausreicht, um das Fahrzeug sicher gegen Wegrollen zu halten und zum anderen, dass die Fahrer bei einem Anfahrwunsch regelmäßig die Betriebsbremse betätigen bzw. betätigen müssen, um den Anfahrvorgang einzuleiten. Das Aufrechterhalten des betriebsbremsenseitigen Bremsdrucks kann dabei zum Beispiel so erfolgen, dass der aktuelle betriebsbremsenseitige Bremsdruck eingesperrt wird, was zum Beispiel durch entsprechende Ventilsteuerung erfolgen kann.

Sollte allerdings der Fall eintreten, dass bei einer zum Zeitpunkt des Lösens der Festellbremse betätigten oder nicht-betätigten Betriebsbremse der aktuelle betriebsbremsenseitige Bremsdruck nicht ausreicht, um das Fahrzeug gegen ein Wegrollen zu sichern, zum Beispiel der Bremsdruck ein vorgegebenes Bremsdruckniveau unterschreitet bzw. überhaupt kein Bremsdruck vorhanden ist, dann wird erfindungsgemäß der Bremsdruck, vorzugsweise selbsttätig und/oder gesteuert mittels der Steuervorrichtung, so angehoben, dass das Fahrzeug gegen ein Wegrollen gesichert ist, zum Beispiel der Bremsdruck auf ein der Wegrollsicherung entsprechendes vorgegebenes Bremsdruckniveau angehoben ist. In diesem Fall wird dann das Lösen der Festellbremse bzw. das Auslegen der Parksperre erfindungsgemäß erst dann freigegeben bzw. gegebenenfalls auch durchgeführt wird, wenn ein Bremsdruck eingestellt worden ist, der das Fahrzeug gegen ein Wegrollen sichert bzw. wenn von der Steuervorrichtung ermittelt worden ist, dass das vorgegebene Bremsdruckniveau erreicht worden ist und damit das Fahrzeug gegen ein Wegrollen gesichert ist. Dies kann beispielsweise durch Betätigung einer Fördereinrichtung bzw. einer Pumpe erfolgen, zum Beispiel einer Pumpe des Bremskreislaufs. Eine derartige Pumpe des Bremskreislaufs kann zum Beispiel eine Hydraulikpumpe und/oder eine Pumpe des ESP- und/oder ESC-Systems eines Fahrzeugs sein, um nur ein Beispiel zu nennen. Vom eben geschilderten Fall sollen ausdrücklich auch solche Betriebssituationen umfasst sein, bei dem der Bremsdruck der Betriebsbremse von Null ausgehend aufgebaut werden muss, zum Beispiel weil ein Fahrer die Betriebsbremse nicht betätigen kann, was zum Beispiel beim hochautomatisierten bzw. pilotierten Fahren, bei dem sich der Fahrer nicht im Fahrzeug befindet, der Fall ist. Hier muss dann der Bremsdruck, zum Beispiel ein aktiver Bremskraftverstärker (eBKV) und/oder ein Schlupfregelsystem (ESC) den Bremsdruck aktiv von Null an aufbauen.

Gemäß einer weiteren besonders bevorzugten Verfahrensführung wird der das Fahrzeug gegen ein Wegrollen sichernde betriebsbremsenseitige Bremsdruck nach dem Schalten in eine nicht der Parkstufe entsprechende Stufe, zum Beispiel eine Fahrstufe, abgebaut, beispielsweise so gesteuert mittels der Steuervorrichtung abgebaut, dass ein Anfahren erst zu dem Zeitpunkt freigegeben wird, zu dem der Fahrzeugvortrieb größer als die Hangabtriebskraft ist. Letzteres berücksichtigt insbesondere den bevorzugten erfindungsgemäßen Anwendungsfall in Verbindung mit einem an einem Hang bzw. auf einer schiefen Ebene abgestelltem Fahrzeug und einem Anfahrwunsch aus dieser Hangsituation heraus.

Für den Fall, dass der Fahrer nach dem Lösen der Feststellbremse nicht innerhalb einer definiert vorgegebenen Zeitspanne, zum Beispiel innerhalb von 10 Minuten (grundsätzlich können jedoch auch andere Zeiten vorgegeben werden), aus der Parkstufe des Automatikgetriebes in eine nicht der Parkstufe entsprechende Stufe umschalten sollte, ist davon auszugehen, dass der Fahrer nicht innerhalb absehbarer Zeit anfahren möchte und erfolgt dann eine Übergabe an die Feststellbremse zur Fahrzeugsicherung mit der Festellbremse. Auch hierbei bleibt die Parksperre dann nach wie vor entlastet. Diese Vorgehensweise berücksichtigt, dass derzeitige Bremskreisläufe mit einem, zum Beispiel hydraulischen, Arbeitsmedium den Bremsdruck nicht dauerhaft halten und ein systembedingter Druckabbau erfolgt, was dann einen Nachförderprozess (der selbstverständlich grundsätzlich auch möglich wäre) erforderlich machen würde, der jedoch durch die Übergabe an die Feststellbremse verhindert werden kann.

Gemäß einer alternativen Verfahrensführung kann vorgesehen sein, dass die Steuervorrichtung die Feststellbremse, ausgehend von einem abgestellten Fahrzeug mit einer eingelegten Parksperre, insbesondere einer unbelastet eingelegten Parksperre, und einer aktivierten Feststellbremse, bei einem fahrerseitig initiierten Lösevorgang der Feststellbremse und bei nichtbetätigter Betriebsbremse erst dann löst, wenn die Parksperre ausgelegt ist. Mit anderen Worten bedeutet dies, dass der Fahrer die Betriebsbremse nicht betätigt, sondern lediglich die Feststellbremse löst. Dieses sofortige Lösen der Feststellbremse wird jedoch von der Steuervorrichtung unterbunden, unabhängig davon, wie oft der Fahrer dieses Lösen initiieren sollte, weil sonst das Fahrzeug in die Parksperre fällt und dort eine unerwünschte Spannung aufgebaut werden würde. Die Steuervorrichtung löst daher die Feststellbremse erst dann, wenn die Parksperre ausgelegt ist.

Gemäß einer weiteren vorteilhaften optionalen Ausgestaltung kann vorgesehen sein, dass die wenigstens eine Steuervorrichtung das Verfahren nur dann ausführt, wenn mittels der wenigstens einen Steuervorrichtung ermittelt worden ist, dass das Fahrzeug mit einer unbelastet eingelegten Parksperre abgestellt ist. Dies kann zum Beispiel durch Erfassen der parksperrenseitigen Last erfolgen, zum Beispiel dergestalt, dass ein das Parksperrenrad belastendes Drehmoment, das sich zum Beispiel aus der auf das Fahrzeug wirkenden Hangabtriebskraft ergibt, ermittelt und/oder erfasst wird, welches Drehmoment über die Sperrklinke am Getriebegehäuse abgestützt wird. Mit einer derartigen Verfahrensführung wird dann sichergestellt, dass der durch das erfindungsgemäße Verfahren bedingte Aufwand nur dann durchgeführt wird, wenn ein Auslegeschlag zuverlässig verhindert bzw. zumindest reduziert werden kann.

Die zuvor gemachten Ausführungen betreffen vor allem den Anfahrvorgang, wobei sichergestellt werden soll, dass die eingelegte Parksperre, vorzugsweise eine unbelastet eingelegte Parksperre, auch unbelastet ausgelegt wird, um einen Auslegeschlag zu vermeiden.

Um auch in Verbindung mit einem Abstell- bzw. Parkvorgang eine parksperrenseitige Verspannung zu vermeiden bzw. zu verringern, wird vorgeschlagen, dass die Parksperre bei Vorliegen einer Parkbedingung erst dann gesteuert mittels der wenigstens einen Steuervorrichtung eingelegt wird, wenn das Fahrzeug mittels der wenigstens einen Bremsanlage, insbesondere mittels der Feststellbremse und/oder mittels der unabhängig von der Feststellbremse betätigbaren Betriebsbremse, gegen ein Wegrollen gesichert ist. Das heißt zum einen, dass das Fahrzeug hier zum Beispiel ausdrücklich auch lediglich mit der Feststellbremse gegen ein Wegrollen gesichert werden kann, um sicherzustellen, dass die Parksperre unbelastet eingelegt werden kann. Alternativ oder zusätzlich hierzu wird die Parksperre bei Vorliegen wenigstens einer Parkbedingung erst dann gesteuert mittels wenigstens einer Steuervorrichtung eingelegt, wenn das Fahrzeug mittels der, unabhängig von der Feststellbremse betätigbaren Betriebsbremse gegen ein Wegrollen gesichert ist.

Letzteres bedeutet, dass das Einlegen der Parksperre solange verzögert wird, bis mittels der, vorzugsweise von einem Fahrer betätigbaren, Betriebsbremse sichergestellt worden ist, dass sich das Fahrzeug nicht mehr bewegen kann. Konkret kann hier dann zum Beispiel ermittelt werden, ob der betriebsbremsenseitige Bremsdruck, insbesondere unabhängig von einer weiteren Betätigung der Betriebsbremse durch den Fahrer, bei Vorliegen der Parkbedingung so eingestellt ist, dass das Fahrzeug gegen ein Wegrollen gesichert ist. Dies kann sofort der Fall sein, wenn der zum Zeitpunkt des Vorliegens der Parkbedingung vorhandene betriebsbremsenseitige Bremsdruck bereits ausreicht, um das Fahrzeug sicher zu halten bzw. gegen ein Wegrollen zu sichern, was regelmäßig der Fall sein wird, wenn der Fahrer das Fahrzeug bis zum Stillstand abgebremst hat. Das heißt, wenn der Bremsdruck der Betriebsbremse ausreicht, um das Fahrzeug sicher zu halten, kann die Parksperre sofort bzw. unverzüglich eingelegt werden und es muss nicht gewartet werden, bis die gegenüber der Betriebsbremse langsamere bzw. trägere Feststellbremse geschlossen ist.

Das bedeutet wiederum, dass für den Fall, dass die Steuervorrichtung bei Vorliegen der Parkbedingung im Wesentlichen gleichzeitig auch die Feststellbremse aktivieren sollte, die Parksperre gesteuert mittels der Steuervorrichtung zeitlich vor dem Aufbringen einer, eine Fahrzeugbewegung verhindernden Feststellbremskraft eingelegt werden kann und damit früher eingelegt werden kann als die Feststellbremse greift, weil das Fahrzeug durch die Betriebsbremse sicher gegen ein Wegrollen gehalten ist. Der eine Fahrzeugbewegung verhindernde betriebsbremsenseitige Bremsdruck steht hier somit schneller zur Verfügung als die eine Fahrzeugbewegung verhindernde Feststellbremskraft.

Sollte dagegen der Bremsdruck der Betriebsbremse bei Vorliegen der Parkbedingung noch nicht ausreichen, um das Fahrzeug gegen ein Wegrollen zu sichern, das heißt der Bremsdruck zum Beispiel ein vorgegebenes Bremsdruckniveau unterschreiten, ab dem sichergestellt ist, dass das Fahrzeug mittels der Betriebsbremse gegen ein Wegrollen gesichert ist, kann der Bremsdruck, vorzugsweise selbsttätig bzw. gesteuert mittels der Steuervorrichtung, so angehoben werden, dass das Fahrzeug gegen ein Wegrollen gesichert ist und erst dann das Einlegen der Parksperre freigegeben werden. Dieses Anheben des Bremsdrucks kann beispielsweise durch Betätigung einer Fördereinrichtung bzw. einer Pumpe erfolgen, zum Beispiel einer Pumpe des Bremskreislaufs. Eine derartige Pumpe des Bremskreislaufs kann zum Beispiel eine Hydraulikpumpe und/oder eine Pumpe des ESP- und/oder ESC-Systems eines Fahrzeugs sein, um nur ein Beispiel zu nennen.

Das Beibehalten des betriebsbremsenseitigen Bremsdrucks bei Vorliegen der Parkbedingung erfolgt dabei vor allem auch unabhängig von einer weiteren Betätigung der Betriebsbremse, zum Beispiel eines Bremspedals der Betriebsbremse, durch den Fahrer. Das Beibehalten bzw. Aufrechterhalten des betriebsbremsenseitigen Bremsdrucks kann dabei zum Beispiel so erfolgen, dass der aktuell vorhandene betriebsbremsenseitige Bremsdruck eingesperrt wird, was zum Beispiel durch entsprechende Ventilsteuerung erfolgen kann.

Für den Fall, dass die Steuervorrichtung bei Vorliegen der Parkbedingung im Wesentlichen gleichzeitig auch die Feststellbremse aktiviert, wird zudem bevorzugt vorgesehen, dass der das Fahrzeug gegen ein Wegrollen sichernde bzw. eine Fahrzeugbewegung verhindernde betriebsbremsenseitige Bremsdruck zumindest so lange, gesteuert mittels der Steuervorrichtung, beibehalten bzw. aufrechterhalten wird, bis die Feststellbremse eine die Fahrzeugbewegung verhindernde Feststellbremskraft aufbringt. Das bedeutet mit anderen Worten, dass dann, wenn die Feststellbremse greift und das Fahrzeug gegen Wegrollen sichert, der betriebsbremsenseitige Bremsdruck nicht mehr unbedingt aufrecht erhalten werden muss und dann entsprechend abgebaut werden kann. Dies kann zum Beispiel gesteuert in Form einer Abbaurampe erfolgen, um nur ein Beispiel zu nennen.

Alternativ könnte vorgesehen sein, dass von der wenigstens einen Steuervorrichtung für den Fall, dass der betriebsbremsenseitige Bremsdruck bei Vorliegen der Parkbedingung nicht ausreichen sollte, das Fahrzeug gegen ein Wegrollen zu sichern, ermittelt wird, ob die Feststellbremskraft der bei Vorliegen der Parkbedingung aktivierten Feststellbremse ausreicht, um das Fahrzeug gegen ein Wegrollen zu sichern. Sollte dies der Fall sein, das heißt die Feststellbremskraft der Feststellbremse ausreichend sein, kann das Einlegen der Parksperre freigegeben werden. Andernfalls wird das Einlegen der Parksperre solange verzögert, bis der betriebsbremsenseitige Bremsdruck und/oder die Feststellbremskraft ausreicht, um das Fahrzeug gegen ein Wegrollen zu sichern. Sollte die Wegrollsicherung mittels der Feststellbremse sichergestellt werden, kann ein gegebenenfalls vorhandener bzw. eventuell eingesperrter betriebsbremsenseitiger Bremsdruck in der zuvor bereits dargestellten Weise abgebaut werden. Diese Verfahrensführung kann zum Beispiel als Redundanz vorteilhaft sein oder dann vorteilhaft sein, wenn, zum Beispiel systembedingt oder störungsbedingt, kein ausreichender oder ausreichend schneller betriebsbremsenseitiger Bremsdruck zur Verfügung gestellt werden kann.

Das Vorliegen einer Parkbedingung ist in Verbindung mit der vorliegenden erfindungsgemäßen Lösung in einem umfassenden Sinne zu verstehen und kann zum Beispiel eine mittels einer geeigneten Sensorik erfasste abnehmende Belastung eines Bremspedals der Betriebsbremse sein. Das heißt das Vorliegen einer Parkbedingung kann bereits dann gegeben sein, wenn bestimmte Tätigkeiten, Betriebszustände etc. darauf schließen lassen, dass das Fahrzeug geparkt werden soll, zum Beispiel bei Verlassen des Fahrzeugs durch den Fahrer, um nur ein Beispiel zu nennen. Nichtsdestotrotz stellt das Anwählen einer Parkstufe des Automatikgetriebes eine bevorzugte Parkbedingung dar, bei der die getriebeseitige Parksperre gesteuert mittels der Steuervorrichtung eingelegt werden soll.

Mit diesen eben erläuterten Verfahrensführungen wird somit der Fahrer beim Abstellen des Fahrzeugs unterstützt und ein unbelastetes bzw. unverspanntes Einlegen der Parksperre ermöglicht. Gleichzeitig führt diese Lösung zu einer geringeren Bauteilbelastung im Getriebe selbst während der Abstellphase. Zudem können letztendlich geringere Auslegekräfte an der Parksperre wirken.

Auch wenn zuvor lediglich aus Gründen der Übersichtlichkeit zum Teil von lediglich einer Steuervorrichtung die Rede war, versteht es sich, dass zur Umsetzung der erfindungsgemäßen Lösung selbstverständlich auch mehrere Steuervorrichtungen vorgesehen werden können. So ist gemäß einer besonders bevorzugten konkreten Ausgestaltung vorgesehen, dass wenigstens eine Steuervorrichtung, insbesondere wenigstens eine Steuer- und/oder Auswertevorrichtung, vorhanden ist, mittels der die Parksperre, insbesondere eine Sperrklinke der Parksperre, zu deren Aktivierung oder Deaktivierung elektronisch angesteuert werden kann. Alternativ oder zusätzlich kann wenigstens eine Steuervorrichtung, insbesondere wenigstens eine Steuer- und/oder Auswertevorrichtung, vorgesehen sein, mittels der die Betriebsbremse, insbesondere wenigstens ein Bremszylinder an wenigstens einem Fahrzeugrad, zur Erfassung und/oder Aufrechterhaltung oder Erzeugung eines Bremsdrucks oder zum Abbau eines Bremsdrucks elektronisch angesteuert werden kann. Weiter alternativ oder zusätzlich kann wenigstens eine Steuervorrichtung, insbesondere wenigstens eine Steuer- und/oder Auswertevorrichtung, vorgesehen sein, mittels der die Feststellbremse, insbesondere eine elektrische Feststellbremse, zu deren Aktivierung oder Deaktivierung elektronisch angesteuert werden kann. An dieser Stelle sei weiter erwähnt, dass die Begrifflichkeit elektrische Feststellbremse hier ebenfalls in einem weiten Sinne zu verstehen ist und sämtliche Arten von elektrischen Feststellbremsen umfassen soll, also zum Beispiel auch elektromechanische oder elektromotorische Feststellbremsen, um nur einige Beispiele zu nennen.

Mit einer oder mehrerer derartiger Steuervorrichtungen lässt sich, insbesondere unter Rückgriff auf gegebenenfalls ohnehin am Fahrzeug bereits vorhandene Aktoren und/oder Sensoren, eine erfindungsgemäße Verfahrensführung auf einfache Weise mit hoher Funktionssicherheit realisieren.

Besonders vorteilhaft wird die erfindungsgemäße Verfahrensführung dann durchgeführt, wenn das Fahrzeug an einem Hang abgestellt bzw. geparkt wird, das heißt, dass die Durchführung der erfindungsgemäßen Lösung beispielsweise davon abhängig gemacht werden kann, ob sich das Fahrzeug auf einem Hang befindet oder nicht. Ein sich auf einem Hang bzw. ganz allgemein gesprochen auf einer schiefen Ebene befindendes Fahrzeug kann grundsätzlich auf unterschiedliche Art und Weise vorgegeben bzw. definiert werden. Beispielsweise kann definiert werden, dass ein sich auf einer schiefen Ebene befindendes Fahrzeug nur in denjenigen Fällen vorliegen soll, in denen die wenigstens eine Steuervorrichtung erfasst und/oder ermittelt, dass die schiefe Ebene eine definiert vorgegebene Steigung bzw. ein definiert vorgegebenes Gefälle, vorzugsweise definiert durch den Steigungs- und/oder Neigungswinkel, aufweist oder überschreitet. Alternativ oder zusätzlich kann ein sich auf einer schiefen Ebene befindendes Fahrzeug aber auch nur in denjenigen Fällen vorliegen, in denen die wenigstens eine Steuervorrichtung erfasst oder ermittelt, dass die Hangabtriebskraft einen definiert vorgegebenen Schwellwert erreicht oder überschreitet. Mit einem derartigen Hangkriterium wird somit erreicht, dass die erfindungsgemäße Verfahrensführung nur dann in der erfindungsgemäßen Weise anstelle bzw. zusätzlich zur an sich gewünschten Parksperrenfunktion durchgeführt wird, wenn bestimmte hohe bzw. einen definierten Schwellwert übersteigende Verspannung des Antriebsstrangs erwartet werden können. Das heißt, sollte beispielsweise keine derartige Hang-Abstell- bzw. Parksituation vorliegen, kann in herkömmlicherweise lediglich die Parksperre aktiviert bzw. deaktiviert werden und braucht die erfindungsgemäße Verfahrensführung nicht angewendet zu werden.

Die Erfassung, ob sich das Fahrzeug auf einer schiefen Ebene bzw. an einem Hang befindet, kann zum Beispiel mittels einer fahrzeugseitig angeordneten Sensoreinrichtung bzw. alternativ oder zusätzlich mittels wenigstens einer fahrzeugseitig angeordneten Navigationseinrichtung erfolgen. Als Sensoreinrichtung kommt beispielsweise ein fahrzeugseitig angeordneter Neigungssensor in Frage und/oder ein fahrzeugseitig angeordneter Beschleunigungssensor, der die Daten zu einer Steuervorrichtung liefert, die dann auf der Basis dieser Daten zum Beispiel die Steigung bzw. das Gefälle der schiefen Ebene ermitteln kann oder die dann zum Beispiel alternativ oder zusätzlich die Hangabtriebskraft ermitteln kann. Bei einem Beschleunigungssensor wird dies dadurch möglich, dass von diesem die Erstbeschleunigung gemessen wird. Ist der Sensor gekippt, wirkt nicht mehr die gesamte Erdbeschleunigung auf die senkrechte Sensorachse, so dass ein Kippen erkannt werden kann. Mit einer Navigationseinrichtung können zum Beispiel Positionsdaten bzw. Positionskoordinaten ermittelt werden, die dann mit in der Navigationseinrichtung hinterlegten bzw. von dieser abgefragten Gelände- bzw. Topografie-Daten verglichen werden können, um zu ermitteln, ob sich das Fahrzeug an einer Steigung bzw. an einem Gefälle befindet.

Eine Anwähleinrichtung des Automatikgetriebes weist bevorzugt eine fahrzeugseitig angeordnete und vom Fahrer betätigbare äußere Schalteinrichtung auf, zum Beispiel einen Handwählhebel, mittels welcher äußeren Schalteinrichtung eine Parkstufe aus- bzw. anwählbar ist. Befindet sich die äußere Schalteinrichtung dann in dieser Parkstufenposition wird der Steuervorrichtung der Wunsch nach einer Aktivierung der Parksperre übermittelt und zwar vorzugsweise durch Signalübertragung und/oder elektrisch übermittelt. Die Übermittlung erfolgt dabei insbesondere mittels SHIFT-BY-WIRE-Technik über eine spezielle Schnittstelle oder zum Beispiel über den Fahrzeugbus, zum Beispiel einen CAN-Bus. Das Gleiche gilt analog umgekehrt für das Auslegen der Parkstufe.

Die sich mit der erfindungsgemäßen Steuervorrichtung ergebenden Vorteile wurden bereits zuvor ausführlich gewürdigt. Insofern wird auf die zuvor gemachten Ausführungen verwiesen. Lediglich ergänzend sei hierzu ausgeführt, dass eine derartige Steuervorrichtung auch durch wenigstens ein ohnehin am Fahrzeug vorhandenes Steuergerät gebildet sein kann, zum Beispiel durch ein Getriebesteuergerät und/oder ein Bremsensteuergerät.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung wird nachfolgend anhand einer Zeichnung lediglich beispielhaft näher erläutert.

Es zeigen:
- Fig. 1: schematisch einen prinzipiellen Aufbau einer fahrzeugseitigen Vorrichtung zur Durchführung eines erfindungsgemäßen Verfahrens,
- Fig. 2: schematisch ein beispielhaftes Ablaufdiagramm zum Einlegen einer Parksperre,
- Fig. 3: eine zur Fig. 2 alternative Verfahrensführung zum Einlegen einer Parksperre, und
- Fig. 4 bis 6: schematisch unterschiedliche beispielhafte Ablaufdiagramme zum Auslegen einer Parksperre.

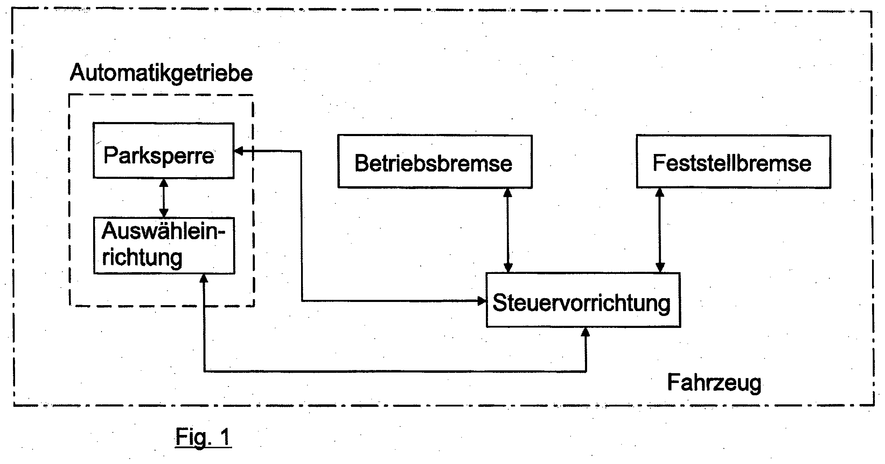

Fig. 1 zeigt beispielhaft einen Aufbau einer Vorrichtung zur Durchführung des erfindungsgemäßen Verfahrens mit einer Steuervorrichtung, einer Feststellbremse, einer Betriebsbremse sowie einem Automatikgetriebe (strichliert dargestellt). Das Automatikgetriebe umfasst unter anderem eine eingangs beschriebene Parksperre sowie eine Anwähleinrichtung, mittels der eine Parkstufe sowie wenigstens eine Fahrstufe anwählbar ist. Konkret kann die Anwähleinrichtung durch eine fahrzeugseitig angeordnete und vom Fahrer betätigbare äußere Schalteinrichtung gebildet sein, zum Beispiel durch einen Handwählhebel, mittels welcher äußeren Schalteinrichtung die Parkstufe bzw. die wenigstens eine Fahrstufe aus- bzw. anwählbar ist.

Die Anwähleinrichtung ist mit der Parksperre signalübertragend verbunden, und zwar gemäß einer Grundeinstellung dergestalt, dass beim Anwählen der Parkstufe die Parksperre aktiviert wird, insbesondere eine elektrisch angesteuerte bzw. elektromechanisch betätigte Parkklinke in ein zugehöriges Parksperrenrad einrastet. Diese Grundeinstellung wird, was nachfolgend anhand von ausgewählten Beispielen noch weiter verdeutlicht wird, mittels der erfindungsgemäßen Lösung gegebenenfalls abgeändert, um die Parksperre nur dann einzulegen bzw. auszulegen, wenn sichergestellt ist, dass ein spannungsreduziertes Auslegen der Parksperre mit einem reduzierten bzw. verhindertem Auslegeschlag möglich wird.

Wie dies der schematischen Darstellung der Fig. 1 weiter entnommen werden kann, umfasst ein derartiges, ein Automatikgetriebe aufweisendes Fahrzeug, insbesondere ein Kraftfahrzeug, weiter bevorzugt eine Betriebsbremse bzw. eine Feststellbremse, die unabhängig von der Betriebsbremse aktivierbar und deaktivierbar ist. Die Betriebsbremse ist beispielsweise als hydraulische Betriebsbremse ausgelegt, könnte jedoch auch eine pneumatische Betriebsbremse sein. Die Feststellbremse kann grundsätzlich eine mechanische Feststellbremse sein, ist jedoch bevorzugt eine elektrische Feststellbremse.

Des Weiteren umfasst das Fahrzeug, wie in Fig. 1 dargestellt, wenigstens eine Steuervorrichtung, die mit der Betriebsbremse, der Feststellbremse, der Parksperre und der Anwähleinrichtung signalübertragend verbunden ist. Mittels der Steuervorrichtung kann somit die Parksperre, insbesondere eine Sperrklinke der Parksperre, zu deren Aktivierung oder Deaktivierung angesteuert werden. Mittels der Steuervorrichtung kann ferner die Betriebsbremse, insbesondere wenigstens ein Bremszylinder an wenigstens einem Fahrzeugrad, zur Erfassung und/oder Aufrechterhaltung oder Erzeugung eines Bremsdrucks oder zum Abbau eines Bremsdrucks elektronisch angesteuert werden. Weiter kann mittels der Steuervorrichtung die Feststellbremse zu deren Aktivierung oder Deaktivierung elektronisch angesteuert werden.

Die signalübertragende Verbindung zwischen der Anwähleinrichtung und der Steuervorrichtung ermöglicht beispielsweise eine Rückkopplung, ob mittels der Anwähleinrichtung eine Parkstufe eingelegt oder ausgelegt werden soll bzw. worden ist.

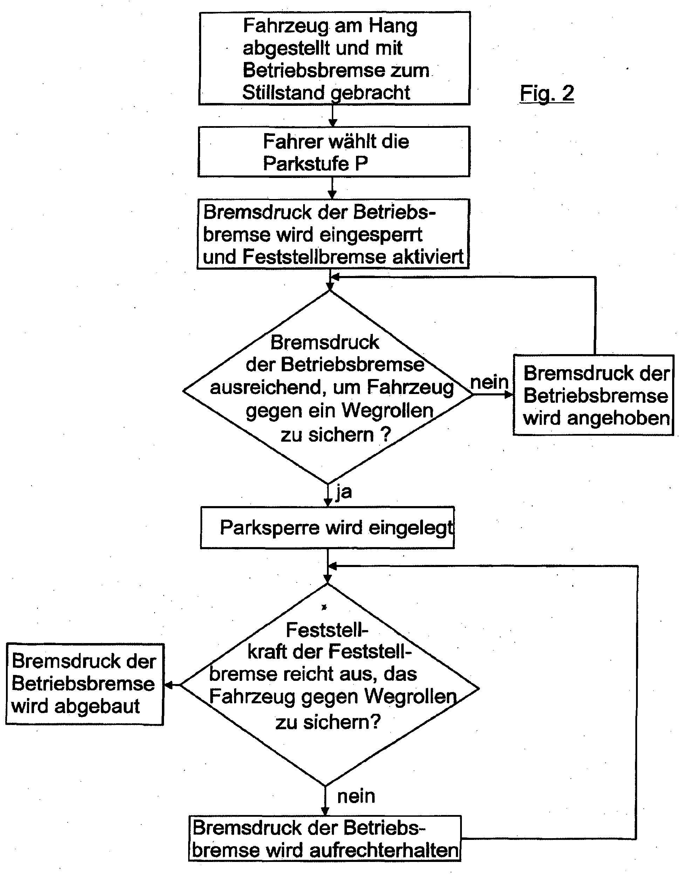

Mit einer derartig aufgebauten Vorrichtung in einem Fahrzeug, die selbstverständlich noch weitere Bauteile aufweisen kann, kann in vorteilhafter Weise ein beispielhaft in der Fig. 2 anhand eines Ablaufdiagramms dargestelltes Einlegen einer Parksperre realisiert werden, mit dem sichergestellt ist, dass die Parksperre so unverspannt bzw. unbelastet eingelegt wird, dass ein Auslegeschlag beim Auslegen der Parksperre vermieden wird bzw. zumindest weitgehend verhindert wird:
Wie dies aus der Fig. 2 ersichtlich ist, wird hier beispielhaft von dem Fall ausgegangen, dass das Fahrzeug am Hang abgestellt ist und mit einer Betriebsbremse zum Stillstand gebracht worden ist. Wählt der Fahrer anschließend die Parkstufe "P" wird dies als das Vorliegen einer Parkbedingung gewertet und ein aktueller betriebsbremsenseitig anstehender Bremsdruck, insbesondere unabhängig von einer weiteren Betätigung der Betriebsbremse durch den Fahrer, gesteuert von der Steuervorrichtung eingesperrt, zum Beispiel durch entsprechende Ansteuerung von Ventilen im Bremskreislauf. Die Begrifflichkeit "Einsperren" ist hier aber ausdrücklich in einem weiten Sinne zu verstehen und soll ausdrücklich sämtliche Maßnahmen umfassen, die geeeignet sind, einen bestimmten Betriebsdruck einzustellen.

Bevorzugt wird, wie in der Fig. 2 dargestellt, im Wesentlichen gleichzeitig auch die Feststellbremse von der Steuervorrichtung aktiviert.

Anschließend wird in einem nächsten Schritt überprüft, ob der Bremsdruck der Betriebsbremse ausreichend ist, um das Fahrzeug gegen ein Wegrollen zu sichern bzw. eine Fahrzeugbewegung sicher zu verhindern.

Ist dies nicht der Fall, weil der aktuell eingesperrte betriebsbremsenseitige Bremsdruck nicht ausreicht, das Fahrzeug gegen ein Wegrollen zu sichern, wird von der Steuervorrichtung eine Fördereinrichtung, zum Beispiel eine Pumpe des Bremskreislaufes, angesteuert und der betriebsbremsenseitige Bremsdruck im Wesentlichen selbststätig auf das gewünschte bzw. vorgegebene Bremsdruckniveau angehoben. Der Bremsdruck der Betriebsbremse reicht somit aus, um das Fahrzeug gegen ein Wegrollen zu sichern, so dass das Einlegen der Parksperre nunmehr freigegeben und die Parksperre eingelegt werden kann.

Sollte dagegen der eingesperrte betriebsbremsenseitige Bremsdruck der Betriebsbremse bereits ausreichend sein, um das Fahrzeug gegen ein Wegrollen zu sichern, dann kann das Einlegen der Parksperre sofort freigegeben und damit die Parksperre sofort eingelegt werden.

Anschließend kann dann bei aktivierter Feststellbremse festgestellt werden, ob die Feststellbremskraft der Feststellbremse bereits ausreicht, um das Fahrzeug gegen ein Wegrollen zu sichern. Sollte dies der Fall sein, kann der Bremsdruck der Betriebsbremse abgebaut werden. Andernfalls wird der Bremsdruck der Betriebsbremse noch so lange aufrechterhalten, bis diese Bedingung erfüllt ist.

Sofern dann die Feststellbremskraft der Feststellbremse ausreicht, das Fahrzeug gegen ein Wegrollen zu sichern, ist sichergestellt, dass trotz eingelegter Parksperre keine Verspannung im Bereich der Parksperre auftreten kann und somit die Parksperre bei einem Anfahrvorgang ohne Auslegeschlag ausgelegt werden kann.

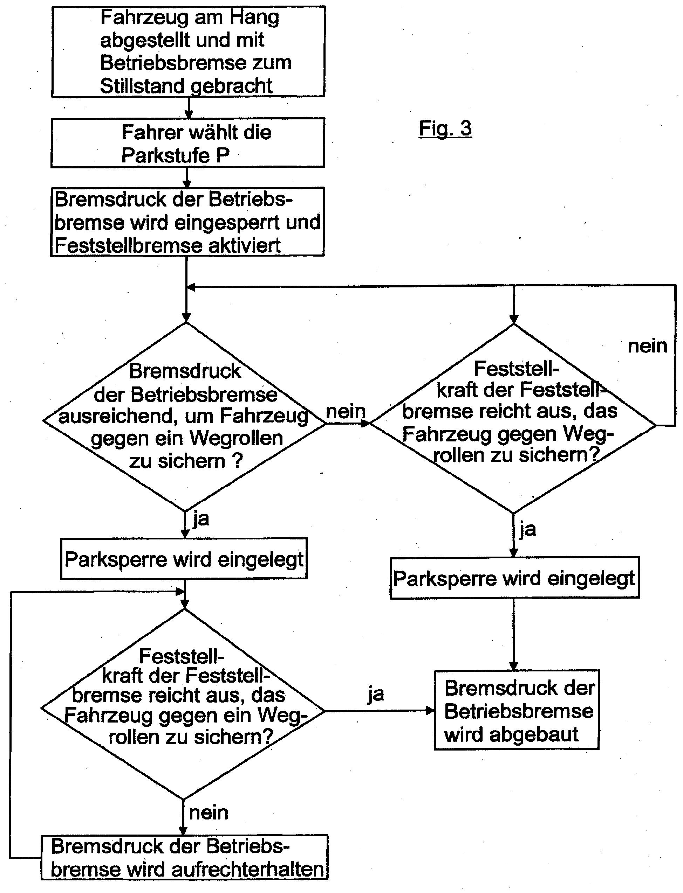

In der Fig. 3 ist eine gegenüber der Fig. 2 alternative Ausgestaltung gezeigt, die sich von dem dortigen Ablauf dahingehend unterscheidet, dass von der Steuervorrichtung für den Fall, dass der aktuelle betriebsbremsenseitige Bremsdruck bei Vorliegen der Parkbedingung ein der Wegrollsicherung entsprechendes vorgegebenes Bremsdruckniveau unterschreitet, geprüft wird, ob bereits eine Feststellbremskraft der aktivierten Feststellbremse vorliegt, die das Fahrzeug gegen ein Wegrollen sichert. Ist dies der Fall, kann die Parksperre eingelegt werden. Ferner kann dann ein gegebenenfalls vorhandener bzw. eingesperrter betriebsbremsenseitiger Bremsdruck in definierter Weise abgebaut werden. Andernfalls wird das Einlegen der Parksperre solange verzögert, bis der betriebsbremsenseitige Bremsdruck und/oder die Feststellbremskraft ausreicht, das Fahrzeug gegen ein Wegrollen zu sichern.

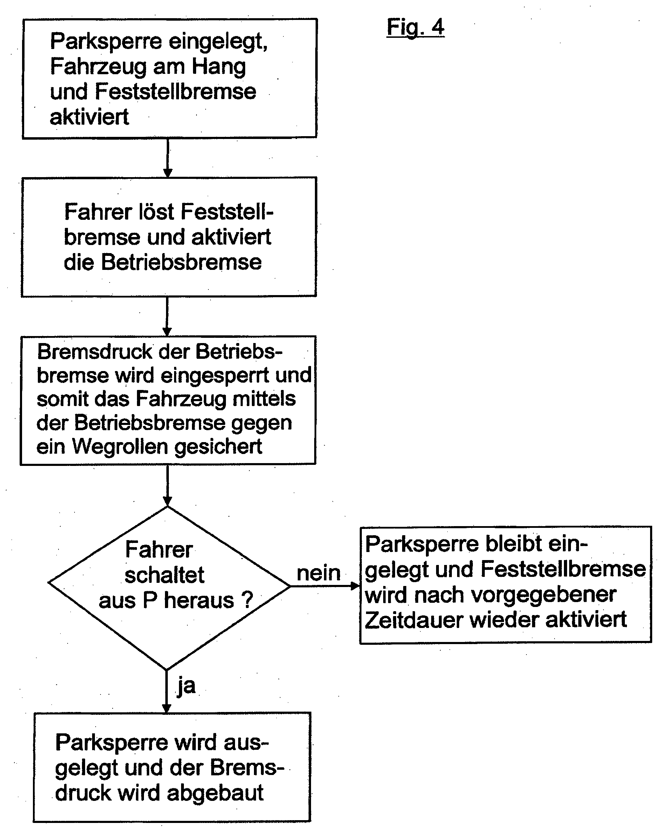

Anschließend werden nunmehr verschiedene Szenarien beispielhaft anhand der Ablaufdiagramme der Figuren 4 bis 6 erläutert, mittels denen beispielhaft sichergestellt werden kann, dass ein Auslegeschlag auch bei einem bevorstehenden bzw. bereits eingeleiteten Anfahrvorgang zuverlässig vermieden werden kann, wobei hier lediglich beispielhaft von einer unbelastet eingelegten Parksperre ausgegangen wird:
An dieser Stelle sei zudem ausdrücklich erwähnt, dass das unbelastete bzw. unverspannte Einlegen der Parksperre grundsätzlich auf unterschiedliche Weise erfolgen kann und ausdrücklich nicht auf die Fälle reduziert werden soll bzw. darf, die vorstehend beispielhaft näher erläutert worden sind. Beispielsweise könnte das unbelastete Einlegen auch so erfolgen, dass die Parksperre bei Vorliegen einer Parkbedingung erst dann gesteuert mittels der wenigstens einen Steuervorrichtung eingelegt wird, wenn das Fahrzeug mittels der Feststellbremse gegen ein Wegrollen gesichert ist bzw. könnte das unbelastete Einlegen auch so erfolgen wie in der DE 10 2013 212 829 A1 geschildert.

Wie dies nunmehr der Fig. 4 entnommen werden kann, wird hierbei zuerst von dem Fall ausgegangen, dass das Fahrzeug am Hang abgestellt ist, die Parkstufe "P" (mit bevorzugt unbelasteter Parksperre) angewählt bzw. eingelegt ist und zudem die Feststellbremse aktiviert ist.
Löst nunmehr der Fahrer die Feststellbremse und aktiviert er bzw. tritt er ferner die Betriebsbremse, wird der Bremsdruck der Betriebsbremse, zum Beispiel über eine entsprechende Ventilansteuerung im Bremskreislauf der Betriebsbremse, eingesperrt und somit das Fahrzeug mittels der Betriebsbremse gegen ein Wegrollen gesichert.

Anschließend wird überprüft, ob der Fahrer tatsächlich aus der Parkstufe P herausschaltet. Sollte dies der Fall sein, wird die Parksperre ausgelegt und kann der Bremsdruck definiert abgebaut werden. Dafür kann eine zeitliche Verzögerung, eine Abbaurampe oder diverse Anfahrlogiken (zum Beispiel ein Anfahren erst, wenn der Vortrieb größer als der Hangabtrieb ist) vorgesehen werden.

Sollte dagegen der Fahrer für eine definierte Zeitspanne nicht aus der Parkstufe herausschalten, ist davon auszugehen, dass der Fahrer nicht anfahren möchte. In diesem Fall bleibt dann die Parksperre eingelegt und wird die Feststellbremse mittels der Steuervorrichtung wieder aktiviert. Das Herausschalten aus der Parkstufe ist hier und nachfolgend ebenfalls lediglich beispielhaft bzw. in einem umfassenden Sinne zu verstehen und soll ausdrücklich jegliches Umschalten von einer Parkstufe in eine nicht der Parkstufe entsprechende Stufe des Automatikgetriebes umfassen.

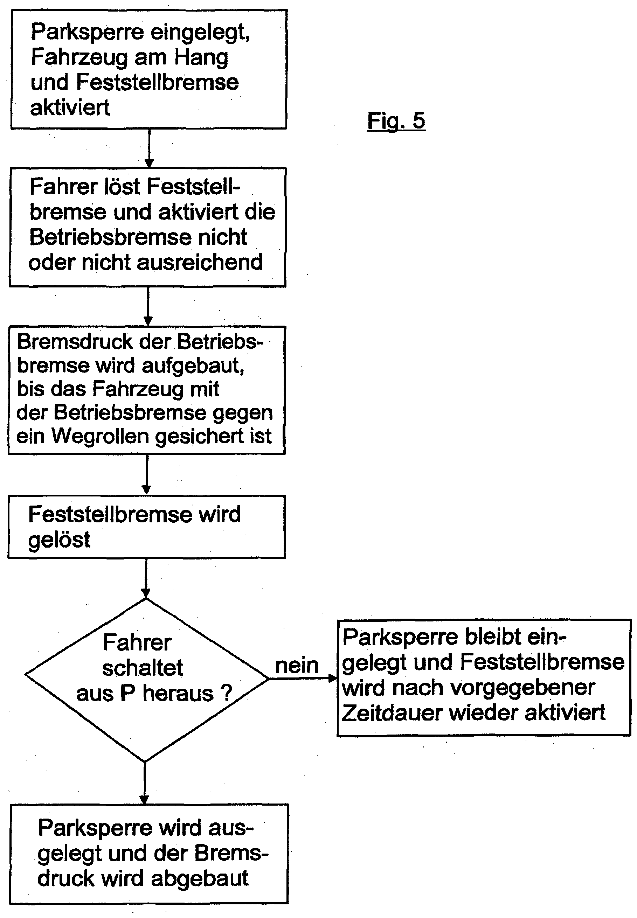

In der Fig. 5 ist der Fall dargestellt, dass das Fahrzeug am Hang abgestellt ist, die Parkstufe P (bevorzugt mit unbelasteter Parksperre) gewählt bzw. eingelegt ist und die Feststellbremse aktiviert ist. Auch hier löst der Fahrer dann die Feststellbremse analog zur Ausführungsform gemäß Fig. 4, aktiviert bzw. tritt jedoch die Betriebsbremse nicht bzw. nicht in einem solchen Maße, dass der Bremsdruck der Betriebsbremse ausreicht, das Fahrzeug mittels der Betriebsbremse gegen ein Wegrollen zu sichern. Davon soll ausdrücklich auch der Fall umfasst sein, dass das Fahrzeug automatisiert betrieben wird (wie zum Beispiel beim hochautomatisierten bzw. pilotierten Fahren), da auch in diesem Fall kein betriebsbremsenseitiger Bremsdruck vorliegt.

Konkret wird hier dann der Bremsdruck im Wesentlichen selbststätig gesteuert mittels der Steuervorrichtung auf einen Bremsdruck angehoben (gegebenenfalls von Null ausgehend), mit dem das Fahrzeug gegen ein Wegrollen gesichert ist, wobei das Lösen der Feststellbremse erst dann freigegeben wird, wenn ein der Wegrollsicherung entsprechender Bremsdruck erreicht worden ist.

Anschließend wird überprüft, ob der Fahrer tatsächlich aus der Parkstufe schaltet. Ist dies der Fall, wird das Auslegen der Parksperre freigegeben und kann dann die Parksperre ausgelegt werden. Zudem kann der Bremsdruck in der zuvor in Verbindung mit der Fig. 4 geschilderten Weise abgebaut werden. Andernfalls bleibt die Parksperre eingelegt und wird die Feststellbremse ebenfalls analog zur vorher in Verbindung mit der Fig. 4 geschilderten Verfahrensführung wieder aktiviert.

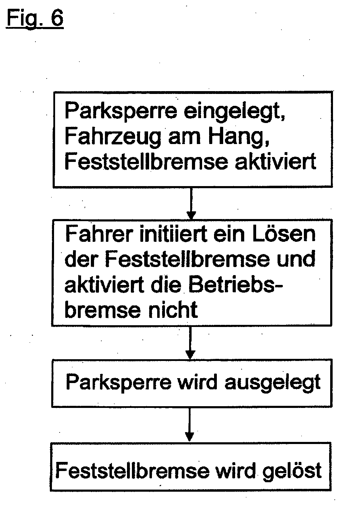

In der Fig. 6 ist eine weitere alternative Verfahrensführung dargestellt, bei der davon ausgegangen wird, dass die Parkstufe P (bevorzugt mit unbelasteter Parksperre) gewählt bzw. eingelegt ist, das Fahrzeug am Hang abgestellt ist und die Feststellbremse aktiviert worden ist. Wird nunmehr vom Fahrer ein Lösen der Feststellbremse initiiert und tritt dieser die Betriebsbremse nicht, dann wird zuerst die Parksperre ausgelegt und dann anschließend die Feststellbremse tatsächlich gelöst.

## Patentansprüche

1. Verfahren zur Betätigung einer Bremseinrichtung eines ein Automatikgetriebe aufweisenden Antriebsstranges eines Fahrzeugs, mit einer getriebeseitigen Parksperre, und mit wenigstens einer Bremsanlage,
wobei das Fahrzeug, ausgehend von einem abgestellten Fahrzeug und einer eingelegten Parksperre bei Vorliegen einer Anfahrbedingung solange mittels wenigstens einer Bremsanlage gegen ein Wegrollen gesichert wird, bis die Parksperre ausgelegt ist, **dadurch gekennzeichnet,**
**dass** das Fahrzeug eine Betriebsbremse und eine unabhängig von der Betriebsbremse betätigbare Feststellbremse als voneinander unabhängig betätigbare Bremsanlagen aufweist, mittels denen das Fahrzeug gegen ein Wegrollen sicherbar ist,
**dass** das Auslegen der Parksperre, ausgehend von einem abgestellten Fahrzeug mit eingelegter Parksperre und aktivierter Feststellbremse, bei einem Lösen der Feststellbremse erst dann gesteuert mit der Steuervorrichtung freigegeben wird, wenn das Fahrzeug mittels der Betriebsbremse gegen ein Wegrollen gesichert ist,
**dass** für den Fall, dass der betriebsbremsenseitige Bremsdruck bei einer zum Zeitpunkt des Lösens der Feststellbremse betätigten oder nicht-betätigten Betriebsbremse nicht ausreicht, um das Fahrzeug gegen ein Wegrollen zu sichern, der Bremsdruck so angehoben wird, dass das Fahrzeug gegen ein Wegrollen gesichert ist, und
**dass** das Lösen der Feststellbremse und das Auslegen der Parksperre erst dann freigegeben wird, wenn ein Bremsdruck erreicht worden ist, mit dem das Fahrzeug gegen ein Wegrollen gesichert ist.

2. Verfahren nach Anspruch 1, **dadurch gekennzeichnet, dass** mittels der Steuervorrichtung ermittelt wird, ob ein betriebsbremsenseitiger Bremsdruck bei einer zum Zeitpunkt des Lösens der Feststellbremse betätigten Betriebsbremse so eingestellt ist, dass das Fahrzeug gegen ein Wegrollen gesichert ist.

3. Verfahren nach Anspruch 2, **dadurch gekennzeichnet, dass** das Auslegen der Parksperre von der Steuervorrichtung freigegeben wird, wenn der betriebsbremsenseitige Bremsdruck ausreicht, um das Fahrzeug gegen ein Wegrollen zu sichern.

4. Verfahren nach einem der vorhergehenden Ansprüche, **dadurch gekennzeichnet, dass** der das Fahrzeug gegen ein Wegrollen sichernde betriebsbremsenseitige Bremsdruck nach dem Schalten in eine nicht der Parkstufe entsprechende Stufe abgebaut wird, insbesondere so gesteuert mit der Steuervorrichtung abgebaut wird, dass ein Anfahren erst zu dem Zeitpunkt freigegeben wird, zu dem der Fahrzeugvortrieb größer als die Hangabtriebskraft ist.

5. Verfahren nach einem der vorhergehenden Ansprüche, **dadurch gekennzeichnet, dass** die Feststellbremse für den Fall, dass der Fahrer nach dem Lösen der Feststellbremse nicht innerhalb einer definiert vorgegebenen Zeitspanne aus der Parkstufe des Automatikgetriebes in eine nicht der Parkstufe entsprechende Stufe umschalten sollte, von der Steuervorrichtung wieder aktiviert wird.

6. Verfahren nach einem der vorhergehenden Ansprüche, **dadurch gekennzeichnet, dass** die wenigstens eine Steuervorrichtung das Verfahren nur dann ausführt, wenn mittels der wenigstens einen Steuervorrichtung ermittelt worden ist, dass das Fahrzeug mit einer unbelastet eingelegten Parksperre abgestellt ist.

7. Verfahren nach einem der vorhergehenden Ansprüche, **dadurch gekennzeichnet, dass** das Schalten von der Parkstufe in eine nicht der Parkstufe entsprechende Stufe des Automatikgetriebes und/oder das Lösen der Feststellbremse und/oder das Betätigen der Betriebsbremse das Vorliegen einer Anfahrbedingung darstellt.

8. Verfahren nach einem der vorhergehenden Ansprüche, **dadurch gekennzeichnet, dass** die Parksperre bei Vorliegen einer Parkbedingung erst dann gesteuert mittels wenigstens einer Steuervorrichtung eingelegt wird, wenn das Fahrzeug mittels der wenigstens einen Bremsanlage, insbesondere mittels der Feststellbremse und/oder mittels der unabhängig von der Feststellbremse betätigbaren Betriebsbremse, gegen ein Wegrollen gesichert ist.

9. Verfahren nach Anspruch 8, **dadurch gekennzeichnet, dass** mittels der Steuervorrichtung bei Vorliegen der Parkbedingung und betätigter Betriebsbremse ermittelt wird, ob ein betriebsbremsenseitiger Bremsdruck, insbesondere unabhängig von einer weiteren Betätigung der Betriebsbremse durch den Fahrer, so eingestellt ist, dass das Fahrzeug gegen ein Wegrollen gesichert ist.

10. Verfahren nach Anspruch 9, **dadurch gekennzeichnet, dass** das Einlegen der Parksperre von der Steuervorrichtung freigegeben wird, wenn der bei Vorliegen der Parkbedingung vorhandene betriebsbremsenseitige Bremsdruck ausreicht, um das Fahrzeug gegen ein Wegrollen zu sichern.

11. Verfahren nach Anspruch 9, **dadurch gekennzeichnet, dass** der Bremsdruck der Betriebsbremse für den Fall, dass der betriebsbremsenseitige Bremsdruck bei Vorliegen der Parkbedingung nicht ausreicht, um das Fahrzeug gegen ein Wegrollen zu sichern, vorzugsweise selbsttätig und/oder gesteuert mittels der Steuervorrichtung, so angehoben wird, dass das Fahrzeug gegen ein Wegrollen gesichert ist, wobei das Einlegen der Parksperre erst dann freigegeben wird, wenn ein Bremsdruck erreicht worden ist, mit dem das Fahrzeug gegen ein Wegrollen gesichert ist.

12. Verfahren nach einem der Ansprüche 8 bis 11, **dadurch gekennzeichnet, dass** die Steuervorrichtung bei Vorliegen der Parkbedingung die Feststellbremse aktiviert.

13. Verfahren nach Anspruch 12, **dadurch gekennzeichnet, dass** der das Fahrzeug gegen ein Wegrollen sichernde betriebsbremsenseitige Bremsdruck zumindest solange, gesteuert mittels der Steuervorrichtung, beibehalten wird, bis die Feststellbremse eine das Wegrollen des Fahrzeugs verhindernde Feststellbremskraft aufbringt.

14. Verfahren nach Anspruch 13, **dadurch gekennzeichnet, dass** der das Fahrzeug gegen ein Wegrollen sichernde betriebsbremsenseitige Bremsdruck nach dem Erreichen der eine Fahrzeugbewegung verhindernden Feststellbremskraft gesteuert mittels der Steuervorrichtung abgebaut wird.

15. Verfahren nach Anspruch 8 oder 9, **dadurch gekennzeichnet, dass** von der wenigstens einen Steuervorrichtung für den Fall, dass der betriebsbremsenseitige Bremsdruck bei Vorliegen der Parkbedingung nicht ausreichen sollte, das Fahrzeug gegen ein Wegrollen zu sichern, ermittelt wird, ob die Feststellbremskraft der bei Vorliegen der Parkbedingung aktivierten Feststellbremse ausreicht, um das Fahrzeug gegen ein Wegrollen zu sichern, wobei bevorzugt vorgesehen ist, dass für den Fall, dass die Feststellbremskraft der Feststellbremse ausreichen sollte, das Einlegen der Parksperre freigegeben wird, andernfalls das Einlegen der Parksperre solange verzögert wird, bis der betriebsbremsenseitige Bremsdruck und/oder die Feststellbremskraft ausreicht, das Fahrzeug gegen ein Wegrollen zu sichern.

16. Verfahren nach einem der Ansprüche 8 bis 15, **dadurch gekennzeichnet, dass** das Anwählen einer Parkstufe des Automatikgetriebes eine Parkbedingung darstellt, bei der die getriebeseitige Parksperre gesteuert mittels der Steuervorrichtung eingelegt werden soll.

17. Verfahren nach einem der vorhergehenden Ansprüche, **dadurch gekennzeichnet, dass** wenigstens eine Steuervorrichtung, insbesondere wenigstens eine Steuer- und/oder Auswertevorrichtung, vorgesehen ist, mittels der die Parksperre, insbesondere eine Sperrklinke der Parksperre, zu deren Aktivierung oder Deaktivierung elektronisch ansteuerbar ist, und/oder mittels der die Betriebsbremse, insbesondere wenigstens ein Bremszylinder an wenigstens einem Fahrzeugrad, zur Erfassung und/oder Aufrechterhaltung oder Erzeugung eines Bremsdrucks oder zum Abbau eines Bremsdrucks elektronisch ansteuerbar ist, und/oder mittels der die Feststellbremse, insbesondere eine elektrische oder elektromechanische oder elektromotorische Feststellbremse, zu deren Aktivierung oder Deaktivierung elektronisch ansteuerbar ist.

18. Verfahren nach einem der vorhergehenden Ansprüche, **dadurch gekennzeichnet, dass** die Steuervorrichtung das Verfahren nur dann ausführt, wenn das Fahrzeug an einem Hang geparkt wird.

19. Steuervorrichtung zur Betätigung einer Bremseinrichtung eines ein Automatikgetriebe aufweisenden Antriebsstrangs eines Fahrzeugs, welche derart ausgebildet und mit Mitteln versehen ist, dass ein Fahrzeug, ausgehend von einem abgestellten Fahrzeug und einer eingelegten Parksperre, bei Vorliegen einer Anfahrbedingung solange mittels wenigstens einer Bremsanlage gegen ein Wegrollen gesichert wird, bis die Parksperre ausgelegt ist, **dadurch gekennzeichnet,**
**dass** das Fahrzeug eine Betriebsbremse und eine unabhängig von der Betriebsbremse betätigbare Feststellbremse als voneinander unabhängig betätigbare Bremsanlagen aufweist, mittels denen das Fahrzeug gegen ein Wegrollen sicherbar ist,
**dass** das Auslegen der Parksperre, ausgehend von einem abgestellten Fahrzeug mit eingelegter Parksperre und aktivierter Feststellbremse, bei einem Lösen der Feststellbremse erst dann gesteuert mit der Steuervorrichtung freigegeben wird, wenn das Fahrzeug mittels der Betriebsbremse gegen ein Wegrollen gesichert ist,
**dass** für den Fall, dass der betriebsbremsenseitige Bremsdruck bei einer zum Zeitpunkt des Lösens der Feststellbremse betätigten oder nicht-betätigten Betriebsbremse nicht ausreicht, um das Fahrzeug gegen ein Wegrollen zu sichern, der Bremsdruck gesteuert mittels der Steuervorrichtung so angehoben wird, dass das Fahrzeug gegen ein Wegrollen gesichert ist, und
**dass** das Lösen der Feststellbremse und das Auslegen der Parksperre erst dann mit der Steuervorrichtung freigegeben wird, wenn ein Bremsdruck erreicht worden ist, mit dem das Fahrzeug gegen ein Wegrollen gesichert ist.

20. Steuervorrichtung nach Anspruch 19, **dadurch gekennzeichnet, dass** die Steuereinrichtung derart ausgebildet und mit Mitteln, insbesondere mit Sensoren und/oder Aktuatoren, versehen ist, dass eine Parksperre bei Vorliegen einer Parkbedingung erst dann eingelegt wird, wenn das Fahrzeug mittels wenigstens einer Bremsanlage gegen ein Wegrollen gesichert ist.

21. Fahrzeug, insbesondere Kraftfahrzeug, mit einer Steuervorrichtung nach Anspruch 19 oder 20.

## Claims

1. Method for activating a braking device in a drive train of a vehicle having an automatic gearbox, with a gear-side parking lock and with at least one braking system,
wherein the vehicle, starting from a parked vehicle and an engaged parking lock given the presence of a starting condition, is secured against rolling away by means of at least one braking system until the parking lock is released, **characterised in that,**
the vehicle has a service brake and a parking brake, which can be activated independently of the service brake, as braking systems that can be activated independently of each other, by means of which the vehicle can be secured against rolling away,
the disengagement of the parking lock, starting from a parked vehicle with an engaged parking lock and activated parking brake, is only permitted in a controlled manner with the control apparatus upon releasing the parking brake, if the vehicle is secured against rolling away by means of the service brake,
in the event that the brake pressure on the service brake, in the case of an activated or non-activated service brake, is not sufficient at the time of releasing the parking brake to secure the vehicle against rolling away, the brake pressure is raised such that the vehicle is secured against rolling away, and the release of the parking brake and the disengagement of the parking lock are only permitted if a brake pressure has been reached with which the vehicle is secured against rolling away.

2. Method according to claim 1, **characterised in that** the control apparatus determines whether the brake pressure on the service brake activated at the time of releasing the parking brake is adjusted such that the vehicle is secured against rolling away.

3. Method according to claim 2, **characterised in that** the disengagement of the parking lock is permitted by the control apparatus if the brake pressure on the service brake is sufficient to secure the vehicle from rolling away.

4. Method according to any one of the preceding claims, **characterised in that** the brake pressure on the service brake securing the vehicle from rolling away is reduced after changing to a gear other than the parking gear, in particular is reduced by the control apparatus in a controlled manner such that driving away is only permitted when the forward propulsion of the vehicle is greater than the downhill-slope force.

5. Method according to any one of the preceding claims, **characterised in that** the parking brake is reactivated by the control apparatus in the event that the driver, having released the parking brake, does not change from the parking gear of the automatic gearbox to a gear other than the parking gear within a predetermined period of time.

6. Method according to any one of the preceding claims, **characterised in that** the at least one control apparatus only executes the method if it has been determined by means of the at least one control apparatus that the vehicle is parked with an uncharged engaged parking lock.

7. Method according to any one of the preceding claims, **characterised in that** changing from the parking gear to a gear other than the parking gear of the automatic gearbox and/or the release of the parking brake and/or activation of the service brake represents a starting condition.

8. Method according to any one of the preceding claims, **characterised in that,** given the presence of a parking condition, the parking lock is only engaged by means of at least one control apparatus in a controlled manner, if the vehicle is secured against rolling away by means of the at least one braking system, in particular by means of the parking brake and/or by means of the service brake which can be activated independently from the parking brake.

9. Method according to claim 8, **characterised in that,** given the presence of a parking condition and if the service brake is activated, the control apparatus determines whether the brake pressure on the service brake, in particular regardless of a further activation of the service brake by the driver, is adjusted such that the vehicle is secured against rolling away.

10. Method according to claim 9, **characterised in that** the engagement of the parking lock is permitted by the control apparatus if the brake pressure on the service brake present in the parking condition is sufficient to secure the vehicle against rolling away.

11. Method according to claim 9, **characterised in that** in the event that the brake pressure on the service brake given the presence of the parking condition is not sufficient to prevent the vehicle from rolling away, the brake pressure on the service brake is raised preferably automatically and/or in a controlled manner by means of the control apparatus, such that the vehicle is secured against rolling away, wherein the engagement of the parking lock is only permitted once a brake pressure has been reached that secures the vehicle against rolling away.

12. Method according to any one of claims 8 to 11, **characterised in that** the control apparatus activates the parking brake given the presence of the parking condition.

13. Method according to claim 12, **characterised in that** the brake pressure on the service brake securing the vehicle against rolling away is maintained by the control apparatus in a controlled manner at least until the parking brake applies a parking brake force to prevent the vehicle from rolling away.

14. Method according to claim 13, **characterised in that** the brake pressure on the service brake securing the vehicle against rolling away is reduced in a controlled manner by means of the control apparatus once a parking brake force preventing vehicle movement has been reached.

15. Method according to claim 8 or 9, **characterised in that** if the brake pressure on the service brake is not sufficient to secure the vehicle against rolling away given the presence of the parking condition, the at least one control apparatus determines whether the parking brake force of the parking brake activated given the presence of the parking condition is sufficient to secure the vehicle against rolling away, wherein preferably provision is made that if the parking brake force of the parking brake is sufficient, the engagement of the parking lock is permitted, or the engagement of the parking lock is delayed until the brake pressure on the service brake and/or the parking brake force is sufficient to secure the vehicle against rolling away.

16. Method according to any one of claims 8 to 15, **characterised in that** the selection of a parking mode of the automatic gearbox represents a parking condition in which the gear-side parking lock controlled by means of the control apparatus should be engaged.

17. Method according to any one of the preceding claims, **characterised in that** at least one control apparatus, in particular at least one control and/or evaluation apparatus, is provided, by means of which the parking lock, in particular a locking pawl of the parking lock, can be electronically controlled for activation or deactivation thereof, and/or by means of which the service brake, in particular at least one brake cylinder on at least one vehicle wheel, can be electrically controlled to detect and/or maintain or generate a brake pressure or to reduce a brake pressure, and or by means of which the parking brake, in particular an electric or electromechanical parking brake, can be electrically controlled for activation or deactivation thereof.

18. Method according to any one of the preceding claims, **characterised in that** the control apparatus only executes the method if the vehicle is parked on a slope.

19. Control apparatus for activating a braking device in a drive train of a vehicle with an automatic gearbox, which is configured and provided with means such that a vehicle, starting from a parked vehicle and an engaged parking lock, given the presence of a starting condition, is secured against rolling away by means of a braking system until the parking lock is disengaged, **characterised in that,**
the vehicle has a service brake and a parking brake, which can be activated independently of the service brake, as braking systems that can be activated independently of each other, by means of which the vehicle can be secured against rolling away,
the disengagement of the parking lock, starting from a parked vehicle with engaged parking lock and activated parking brake, is only permitted in a controlled manner with the control apparatus upon releasing the parking brake, if the vehicle is secured against rolling away by means of the service brake,
in the event that the brake pressure on the service brake, in the case of an activated or non-activated service brake, is not sufficient at the time of releasing the parking brake to secure the vehicle against rolling away, the brake pressure is raised in a controlled manner by means of the control apparatus such that the vehicle is secured against rolling away, and
the release of the parking brake and the disengagement of the parking lock are only permitted with the control apparatus if a brake pressure has been reached with which the vehicle is secured against rolling away.

20. Control apparatus according to claim 19, **characterised in that** the control apparatus is configured and provided with means, in particular with sensors and/or actuators, such that given the presence of a parking condition, a parking lock is only engaged if the vehicle is secured against rolling away by means of at least one braking system.

21. Vehicle, in particular a motor vehicle, with a control apparatus according to claim 19 or 20.

## Revendications

1. Procédé d'actionnement d'un dispositif de freinage d'une chaîne cinématique, présentant une transmission automatique, d'un véhicule, avec un verrou de stationnement côté transmission, et avec au moins un système de freinage,
dans lequel le véhicule, partant d'un véhicule en stationnement et d'un verrou de stationnement enclenché en présence d'une condition de démarrage est sécurisé contre un déplacement au moyen d'au moins un système de freinage, jusqu'à ce que le verrou de stationnement soit désenclenché, **caractérisé en ce**
**que** le véhicule présente un frein de service et un frein de stationnement actionnable indépendamment du frein de service en tant que systèmes de freinage actionnables indépendamment l'un de l'autre, au moyen desquels le véhicule peut être sécurisé contre un déplacement,
**que** le désenclenchement du verrou de stationnement, partant d'un véhicule en stationnement avec verrou de stationnement enclenché et frein de stationnement activé, n'est libéré de manière commandée avec le dispositif de commande lors d'un desserrage du frein de stationnement que lorsque le véhicule est sécurisé contre un déplacement au moyen du frein de service,
**que** dans le cas où la pression de freinage côté frein de service d'un frein de service actionné ou non actionné au moment du desserrage du frein de stationnement ne suffit pas à sécuriser le véhicule contre un déplacement, la pression de freinage est augmentée de sorte que le véhicule soit protégé contre un déplacement, et
**que** le desserrage du frein de stationnement et le désenclenchement du verrou de stationnement ne sont libérés que lorsqu'une pression de freinage a été atteinte, avec laquelle le véhicule est sécurisé contre un déplacement.

2. Procédé selon la revendication 1, **caractérisé en ce qu'**il est déterminé au moyen du dispositif de commande si une pression de freinage côté frein de service d'un frein de service actionné au moment du desserrage du frein de stationnement est réglée de sorte que le véhicule soit sécurisé contre un déplacement.

3. Procédé selon la revendication 2, **caractérisé en ce que** le désenclenchement du verrou de stationnement est libéré par le dispositif de commande lorsque la pression de freinage côté frein de service suffit à sécuriser le véhicule contre un déplacement.

4. Procédé selon l'une quelconque des revendications précédentes, **caractérisé en ce que** la pression de freinage côté frein de service sécurisant le véhicule contre un déplacement est réduite après la commutation dans un niveau ne correspondant pas au niveau de stationnement, en particulier est réduite de manière commandée avec le dispositif de commande de sorte qu'un démarrage n'est libéré qu'au moment où la propulsion de véhicule est supérieure à la force descensionnelle.

5. Procédé selon l'une quelconque des revendications précédentes, **caractérisé en ce que** le frein de stationnement est à nouveau activé par le dispositif de commande dans le cas où le conducteur après le desserrage du frein de stationnement ne devait pas commuter dans un laps de temps prescrit de manière définie du niveau de stationnement de la transmission automatique à un niveau ne correspondant pas au niveau stationnement.

6. Procédé selon l'une quelconque des revendications précédentes, **caractérisé en ce que** l'au moins un dispositif de commande exécute le procédé seulement lorsqu'il a été déterminé au moyen de l'au moins un dispositif de commande que le véhicule est en stationnement avec un verrou de stationnement enclenché sans charge.

7. Procédé selon l'une quelconque des revendications précédentes, **caractérisé en ce que** la commutation du niveau de stationnement à un niveau ne correspondant pas au niveau de stationnement de la transmission automatique et/ou le desserrage du frein de stationnement et/ou l'actionnement du frein de service constitue la présence d'une condition de démarrage.

8. Procédé selon l'une quelconque des revendications précédentes, **caractérisé en ce que** le verrou de stationnement est enclenché en présence d'une condition de stationnement de manière commandée au moyen d'au moins un dispositif de commande que lorsque le véhicule est sécurisé contre un déplacement au moyen de l'au moins un système de freinage, en particulier au moyen du frein de stationnement et/ou au moyen du frein de service actionnable indépendamment du frein de stationnement.

9. Procédé selon la revendication 8, **caractérisé en ce qu'**il est déterminé au moyen du dispositif de commande en présence de la condition de stationnement et du frein de service actionné si une pression de freinage côté frein de service, en particulier indépendamment d'un autre actionnement du frein de service par le conducteur, est réglée de sorte que le véhicule soit sécurisé contre un déplacement.

10. Procédé selon la revendication 9, **caractérisé en ce que** l'enclenchement du verrou de stationnement est libéré par le dispositif de commande lorsque la pression de freinage côté frein de service présente en présence de la condition de stationnement suffit à sécuriser le véhicule contre un déplacement.

11. Procédé selon la revendication 9, **caractérisé en ce que** la pression de freinage du frein de service est augmentée, de préférence automatiquement et/ou de manière commandée au moyen du dispositif de commande, dans le cas où la pression de freinage côté frein de service en présence de la condition de stationnement ne suffit pas à sécuriser le véhicule contre un déplacement de sorte que le véhicule soit sécurisé contre un déplacement, dans lequel l'enclenchement du verrou de stationnement n'est libéré que lorsqu'une pression de freinage a été atteinte avec laquelle le véhicule est sécurisé contre un déplacement.

12. Procédé selon l'une quelconque des revendications 8 à 11, **caractérisé en ce que** le dispositif de commande active le frein de stationnement en présence d'une condition de stationnement.

13. Procédé selon la revendication 12, **caractérisé en ce que** la pression de freinage côté frein de service sécurisant le véhicule contre un déplacement est maintenu, de manière commandée au moyen du dispositif de commande, au moins jusqu'à ce que le frein de stationnement applique une force de frein de stationnement empêchant le déplacement du véhicule.

14. Procédé selon la revendication 13, **caractérisé en ce que** la pression de freinage côté frein de service sécurisant le véhicule contre un déplacement est réduite de manière commandée au moyen du dispositif de commande après l'atteinte de la force de frein de stationnement empêchant un déplacement de véhicule.

15. Procédé selon la revendication 8 ou 9, **caractérisé en ce qu'**il est déterminé par l'au moins un dispositif de commande, dans le cas où la pression de freinage côté frein de service en présence de la condition de stationnement devait ne pas suffire à sécuriser le véhicule contre un déplacement, si la force de frein de stationnement du frein de stationnement activé en présence de la condition de stationnement suffit à sécuriser le véhicule contre un déplacement, dans lequel il est prévu de préférence que dans le cas où la force de frein de stationnement du frein de stationnement devait suffire, l'enclenchement du verrou de stationnement est libéré, dans le cas contraire l'enclenchement du verrou de stationnement est retardé jusqu'à ce que la pression de freinage côté frein de service et/ou la force de frein de stationnement suffise à sécuriser le véhicule contre un déplacement.

16. Procédé selon l'une quelconque des revendications 8 à 15, **caractérisé en ce que** la sélection d'un niveau de stationnement de la transmission automatique constitue une condition de stationnement pour laquelle le verrou de stationnement côté transmission doit être enclenché de manière commandée au moyen du dispositif de commande.

17. Procédé selon l'une quelconque des revendications précédentes, **caractérisé en ce qu'**au moins un dispositif de commande, en particulier au moins un dispositif de commande et/ou d'évaluation, est prévu, au moyen duquel le verrou de stationnement, en particulier un cliquet d'arrêt du verrou de stationnement, peut être commandé électroniquement pour son activation ou sa désactivation, et/ou au moyen duquel le frein de service, en particulier au moins un cylindre de frein au niveau d'au moins une roue de véhicule, peut être commandé électroniquement pour la détection et/ou le maintien ou la génération d'une pression de freinage ou pour la réduction de la pression de freinage, et/ou au moyen duquel le frein de stationnement, en particulier un frein de stationnement électrique ou électromécanique ou électromoteur, peut être commandé électroniquement pour son activation ou sa désactivation.

18. Procédé selon l'une quelconque des revendications précédentes, **caractérisé en ce que** le dispositif de commande exécute le procédé seulement lorsque le véhicule est garé sur une pente.

19. Dispositif de commande pour l'actionnement d'un dispositif de freinage d'une chaîne cinématique, présentant une transmission automatique, d'un véhicule, lequel est réalisé et doté de moyens de sorte qu'un véhicule, partant d'un véhicule en stationnement et d'un verrou de stationnement enclenché, en présence d'une condition de démarrage est sécurisé au moyen d'au moins un système de freinage contre un déplacement, jusqu'à ce que le verrou de stationnement soit désenclenché **caractérisé en ce**
**que** le véhicule présente un frein de service et un frein de stationnement actionnable indépendamment du frein de service en tant que systèmes de freinage actionnables indépendamment l'un de l'autre, au moyen desquels le véhicule peut être sécurisé contre un déplacement,
**que** le désenclenchement du verrou de stationnement, partant d'un véhicule en stationnement avec verrou de stationnement enclenché et frein de stationnement activé, n'est libéré de manière commandée avec le dispositif de commande lors d'un desserrage du frein de stationnement que lorsque le véhicule est sécurisé contre un déplacement au moyen du frein de service,
**que** dans le cas où la pression de freinage côté frein de service d'un frein de service actionné ou non actionné au moment du desserrage du frein de stationnement ne suffit pas à sécuriser le véhicule contre un déplacement, la pression de freinage est augmentée de manière commandée au moyen du dispositif de commande de sorte que le véhicule soit protégé contre un déplacement, et
**que** le desserrage du frein de stationnement et le désenclenchement du verrou de stationnement ne sont libérés avec le dispositif de commande que lorsqu'une pression de freinage a été atteinte, avec laquelle le véhicule est sécurisé contre un déplacement.

20. Dispositif de commande selon la revendication 19, **caractérisé en ce que** le dispositif de commande est réalisé et doté de moyens, en particulier de capteurs et/ou d'actionneurs, de sorte qu'un verrou de stationnement est enclenché en présence d'une condition de stationnement que lorsque le véhicule est sécurisé contre un déplacement au moyen d'au moins un système de freinage.

21. Véhicule, en particulier véhicule automobile, avec un dispositif de commande selon la revendication 19 ou 20.
